(19) **Europäisches Patentamt / European Patent Office / Office européen des brevets**

(11) **EP 1 563 932 B1**

(12) **EUROPEAN PATENT SPECIFICATION**

(45) Date of publication and mention
of the grant of the patent:
**22.10.2008 Bulletin 2008/43**

(21) Application number: **03769986.5**

(22) Date of filing: **29.10.2003**

(51) Int Cl.:
**B22F 9/20** (2006.01)

(86) International application number:
**PCT/JP2003/013879**

(87) International publication number:
**WO 2004/039523 (13.05.2004 Gazette 2004/20)**

(54) **METHOD FOR PREPARING METAL POWDER AND METHOD FOR EVALUATING RAW MATERIAL OR DILUTING SALT FOR USE THEREIN**

HERSTELLUNGSVERFAHREN FÜR METALLPULVER UND VERFAHREN ZUR EVALUIERUNG VON ROHMATERIAL ODER SALZVERDÜNNUNG ZUR VERWENDUNG DARIN

PROCEDE DESTINE A PREPARER UNE POUDRE DE METAL ET PROCEDE DESTINE A EVALUER UN MATERIAU BRUT OU A DILUER DU SEL EN VUE DE L'UTILISER DANS CE PROCEDE

(84) Designated Contracting States:
**AT BE BG CH CY CZ DE DK EE ES FI FR GB GR HU IE IT LI LU MC NL PT RO SE SI SK TR**

(30) Priority: **01.11.2002 JP 2002319848**

(43) Date of publication of application:
**17.08.2005 Bulletin 2005/33**

(73) Proprietor: **Cabot Supermetals K.K.
Tokyo 105-0002 (JP)**

(72) Inventors:
• **MAEDA, Kazuya
Cabot Supermetals K.K.
Kawanuma-gun,
Fukushima 969-3431 (JP)**

• **TAKEDA, Syuichi
Cabot Supermetals K.K.
Kawanuma-gun,
Fukushima 969-3431 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 561 531       WO-A1-95/32313
JP-A- 4 329 808       US-A- 4 149 876
US-A- 5 234 491**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method for producing a tantalum powder which may be used for producing an anode electrode for an electrolytic capacitor, and in particular, to a method for producing a tantalum powder which contains a minimum amount of impurities, and to a method for evaluating raw material or a diluent salt used for the producing method.

Recently, there is demand for an electronic integrated circuit which can be driven with a low voltage, at high frequency, and with reduced noise. Therefore, there is also demand for a capacitor having a low ESR and a high capacity.

Aluminum electrolytic capacitors are mainly used as the capacitors. However, because of superior properties, such as low ESR, and high capacity, a tantalum or niobium capacitor, which uses an anode made of tantalum or niobium, has received much attention as a substitute for aluminum electrolytic capacitors. Therefore, production techniques for the metal powder have been extensively developed.

At the present time, a tantalum or niobium powder is generally produced by a method in which metal salts containing tantalum or niobium such as tantalum potassium fluoride, and niobium potassium fluoride, are reduced in a diluent salt using sodium, potassium, or the like at a high temperature of 700°C or more. This reduction reaction is generally conducted in a reaction vessel made of a nickel alloy or stainless steel.

However, when metal salts containing tantalum or niobium, which is raw material, or a diluent salt contains moisture, the reaction vessel reacts with the moisture. Due to this, impurities such as Fe, Ni, Cr, and Mo, which are derived from the reaction vessel contaminates a resulting tantalum or niobium powder. When the tantalum or niobium powder containing impurities is used for an anode for an electrolytic capacitor, a problem that performance of the capacitor having the anode decreases arises. Therefore, the raw material and the diluent salt are used after drying. Whether potassium chloride is sufficiently dried or not is generally determined by a drying loss in accordance with JIS-K8121, regarding potassium fluoride is determined by an ignition loss in accordance with JIS-K8815, and regarding the metal salt is determined by a drying loss in accordance with JIS-K0068-5.

Specifically, the drying loss of potassium chloride is measured by using 2.0 g of a sample (the sample weighed to an accuracy of 0.1mg) and drying the sample at 110°C for 2 hours. When the drying loss is 2 mg or less, the potassium chloride is considered as being sufficient dried. The ignition loss of potassium fluoride is measured by weighing and adding 1.0 g of a sample (the sample weighed to an accuracy of 0.1 mg) in a platinum crucible, drying the sample at 500°C for 1 hour. When the ignition loss is 10 mg or less, the potassium fluoride is considered as being sufficiently dried. Moisture in the metal salt is measured by heating and drying the sample at 105°C until the weight of the sample is not changed, and calculating loss weight after drying. The loss weight is considered to be the weight of the moisture.

EP1561531 A1, which is a prior art reference according to Article 54 (3) and (4) EPC, relates to a method of producing niobium powder, comprising the step of reducing potassium niobate fluoride in a diluent salt to produce niobium powder, wherein the potassium niobate fluoride has a water content of 1000 ppm or less as determined from an amount of water generated upon heating at 600°C according to the Karl Fischer method.

US-A-5 234 491 discloses the production of Ta powder by reducing a Ta salt in the presence of an active ingredient to control the impurity content by reducing the moisture.

When raw material or a diluent salt, which has a very small amount of moisture based on these measurement methods, is used, there is a case in which a tantalum powder containing much impurities is obtained.

Therefore, an object of the present invention is to provide a method for stably producing a tantalum powder which has excellent characteristics as an anode of a capacitor, in which contamination by impurities of a tantalum powder is held to a minimum, which is caused by the reaction between the reaction vessel and moisture contained in a raw material or a diluent salt, and a method for evaluating whether raw material or a diluent salt is suitable for producing a tantalum powder, and conditions for preventing contamination of impurities.

A method for producing a metal powder is a method in which a metal salt containing tantalum is reduced in a diluent salt to obtain a tantalum powder, wherein a total percentage of moisture in the metal salt and the diluent salt is 0.2% by mass or less, as determined by the Karl Fisher method based on an amount of moisture generated by heating the metal salt and the diluent salt to 600°C.

It is preferable that the diluent salt be potassium fluoride or a mixture containing potassium fluoride, and for the moisture in potassium fluoride alone to be 0.15% by mass or less, as determined by the Karl Fisher method.

It is preferable that the diluent salt be potassium chloride or a mixture containing potassium chloride, and for the moisture percentage in potassium chloride alone to be 0.05% by mass or less, as determined by the Karl Fisher method.

It is preferable that the diluent salt be tantalum potassium fluoride, and for the moisture percentage in tantalum potassium fluoride alone to be 0.1% by mass or less, as determined by the Karl Fisher method.

The metal powder produced by the method of the present invention is suitably used for an anode for an electrolytic capacitor.

A method for evaluating a metal salt of the present invention is a method for evaluating a metal salt containing tantalum used for producing a tantalum powder, wherein a moisture percentage in the metal salt is measured based on an amount of moisture which is generated by heating the metal salt to 600°C or more.

A method for evaluating a metal salt of the present invention is a method for r evaluating a metal salt used for producing a tantalum powder, wherein a moisture percentage in the diluent salt is measured based on an amount of moisture which is generated by heating the metal salt to 600°C or more.

Below, the present invention is explained in detailed.

The present invention provides a method in which a metal salt containing tantalum is reduced in a diluent salt using a reducing agent at a high temperature of 700°C or more, and a tantalum power is produced, wherein a moisture percentage is measured based on an amount of moisture which is generated by heating the metal salt, which is raw material, and the diluent salt to 600°C or more, and the metal salt and the diluent salt are evaluated previously whether they are suitable for producing tantalum powder, and thereby, contamination of impurities, which are generated by a reaction between moisture contained in the metal salt or the diluent salt and the reaction vessel, is held to the minimum to reliably produce metal salt and diluent salt which produce stably metal powder having high purity.

In the method for evaluating a metal salt and a diluent salt, a moisture percentage in the metal salt and the diluent salt is measured based on an amount of water, which is generated by heating the metal salt and the diluent salt to 600°C or more.

When the metal salt and the diluent salt are heated, moisture absorbed in the surface of the metal salt and the diluent salt is desorbed and evaporated at approximately 250°C or less. When heating is performed continuously, and the temperature reaches approximately 500°C, crystal water incorporated in crystals of the metal salt or the diluent salt is desorbed and starts to evaporate, and desorption of the crystal water is completed at less than 600°C. In other words, it is possible to evaporate not only absorbed water but also crystal water incorporated in the crystals by heating the metal salt and the diluent salt to 600°C or more.

Therefore, in order to measure a more exact moisture percentage of the metal salt and the diluent salt, and evaluate whether the metal salt and the diluent salt are suitable for producing a metal powder, it is necessary to determine a moisture percentage based on an amount of water, which is generated by heating the metal salt and the diluent salt to 600°C or more. It is more preferable that whether the metal salt and the diluent salt is suitable for producing a metal powder be evaluated by determining a moisture percentage based on an amount of water, which is generated by heating the metal salt and the diluent salt to a temperature from 600°C to each melting point.

The reasons are as follows.

When the heating temperature of the metal salt and the diluent is less than 600°C, desorption of crystal water is incomplete, and an exact moisture percentage cannot be measured. When the heating temperature of the metal salt and the diluent salt is more than the boiling point of the metal salt and the diluent salt, the probability that the metal salt and diluent salt react with a measuring device increases, measuring results vary widely, and an exact moisture percentage cannot be determined.

Example of a method for measuring a water content in a metal salt and a diluent salt includes a method in accordance with 4.5 in JIS-K0068 (Test method for water content of chemical products).

Specifically, 1 to 3 g of a sample is weighed, the sample is set in a carburetor, which is directly connected to a moisture measuring device using the Karl Fisher method. The temperature of the carburetor is adjusted to 600°C or more and less than the boiling point to generate water vapor, and then the water vapor is absorbed in alcohol or the like. After that, the moisture is titrated with a Karl Fisher's reagent.

In this way, the moisture percentage is determined based on an amount of water, which is generated by heating to 600°C or more, in a simple method such as the Karl Fisher method, and whether the metal salt and the diluent salt are suitably used for producing a metal powder is evaluated.

Conventionally, after heating the metal salt and the diluent to 250°C or less, the resulting metal salt and diluent salt are used for producing a metal powder. However, crystal water is not desorbed by heating to 250°C or less, and an exact moisture percentage cannot be measured based on an amount of water, which is generated by heating to 250°C or less. Due to this, it is impossible to know the amount of impurities contained in the obtained metal powder and whether the obtained metal powder is suitable as a raw material of an anode for an electrolytic capacitor, until the metal powder is actually produced and impurities due to the moisture in the metal powder are practically analyzed.

However, according to the evaluation method of the present invention, an exact moisture percentage in the metal salt and the diluent salt is determined by measuring in the Karl Fisher method based on an amount of water, which is generated by heating the metal salt and the diluent salt to 600°C. Thereby, whether the metal powder is suitable as a raw material for an anode of an electrolytic capacitor can be judged.

When the moisture percentage is high, since moisture can be reduced by re-crystallization, a metal salt and a diluent salt, which produce stably a metal powder having high purity and which is suitable for an anode of an electrolytic capacitor, are certainly produced.

The method for producing a metal powder of the present invention is a method in which a tantalum powder is produced using the metal salt and the diluent salt, which are judged as suitable material for producing a metal powder by the above-mentioned evaluation method.

Example of the metal salt containing tantalum, is not limited to, but includes, potassium fluoride salts, and halides.

Example of potassium fluoride salts includes tantalum potassium fluoride. Example of halides includes tantalum pentachloride, low-grade tantalum chloride, iodides, and bromides.

Among the metal salts containing tantalum, tantalum potassium fluoride is preferable, because it is stable chemically, and it is less hygroscopic.

Example of the diluent salt used for the reduction reaction includes potassium chloride, potassium fluoride, sodium chloride, sodium fluoride, and the like. The diluent salt can be used alone or in combination. Among these diluent salts, potassium chloride, potassium fluoride, and a mixture thereof are preferable, because these diluent salts having high quality can be easily obtained.

Example of the reducing agent used for the reduction reaction includes alkali metals and alkaline earth metals such as sodium, potassium, magnesium, calcium; hydrides of alkali metals and alkaline earth metals such as magnesium hydride, potassium hydride; and reducing gases such as gas containing hydrogen, and the like.

Below, specific methods for producing a metal powder are explained referring to methods for producing a tantalum powder.

After drying a reaction vessel made of a nickel alloy or stainless steel at approximately 130°C, a mixture salt containing potassium chloride, potassium fluoride, and the like as the diluent salt is put in the reaction vessel. Then tantalum potassium fluoride, which is the metal salt, and raw material, is put in the reaction vessel, and the reaction vessel is covered with a cover, and air inside of the reaction vessel is sufficiently replaced with an inert gas such as argon. After that, they are heated to 800°C to 900°C while stirring, and they are melted, and an amount of sodium as a reducing agent, which is sufficient to reduce tantalum potassium fluoride which is put into the reaction vessel previously. Then, the reduction reaction shown in the following formula (1) is conducted.

$$K_2TaF_7 + 5Na \rightarrow 2KF + 5NaF + Ta \qquad (1)$$

In the present invention, a metal powder is produced by using the metal salt and the diluent salt which have a moisture percentage of 0.2% by mass or less, as determined by the Karl Fisher method based on the amount of moisture generated by heating the metal salt and the diluent salt to 600°C.

The Karl Fisher method is a method for measuring an amount of water using a Karl Fisher's agent, which is a quantitative agent for water. The Karl Fisher's agent is a mixture agent containing iodine, sulfur dioxide, and pyridine at molar ratio of 1:3:10 (iodine: sulfur dioxide: pyridine). An amount of water contained in a sample is exactly measured by using 1 mol of iodine $(I_2)$ to react with 1 mol of water $(H_2O)$, and titrating the sample, in which water is dissolved in alcohol, with the Karl Fisher's agent.

The end point of titration is determined visually, a different-metal electrodes potentiometric titration method, a constant voltage polarizing current titration, and the like.

Specifically, an amount of water is measured by weighing 1 to 3 g of a sample, arranging the sample in a carburetor in a blow-box.

Moisture adhered to the sample during a sampling process is evaporated by heating to 100°C to 150°C. The amount of moisture is measured by the Karl Fisher's moisture evaporation method. After that, the sample is heated to 600°C or more, and the amount of moisture generated is similarly measured by the Karl Fisher's moisture evaporation method. Due to this, the amount of moisture in the reduction reaction is exactly measured.

When the total moisture percentage under high temperature conditions such that crystal water incorporated in crystals of the metal salt and the diluent salt is desorbed is 0.2% by mass or less, and the metal salt is reduced in the diluent salt, the amount of water generated from the metal salt and the diluent salt is very small. As a result, it is possible to maintain the amount of impurities such as Fe, Ni, Cr, Mo, which are generated by the reaction between the water and the reaction vessel used for the reduction reaction to minimum, and to decrease the contamination by impurities of a tantalum powder to 20 ppm or less.

In addition, it is possible to produce a capacitor having low leakage current and high pressure resistance by using a tantalum powder containing less impurity contamination to form an anode.

When a tantalum powder is produced by using a metal salt and a diluent salt, which has total moisture percentage of more than 0.2% by mass, a large amount of water is generated from the metal salt and the diluent salt during the reduction reaction, the resulting tantalum powder is contaminated with a large amount of impurities such as Fe, Ni, Cr, and Mo.

When the tantalum powder containing a large amount of impurities is used to produce an anode, leakage current increases and pressure resistance deteriorates in the resulting capacitor. Therefore, the resulting tantalum powder is not suitable for raw material of an anode.

In the present invention, it is preferable for the diluent salt to be potassium fluoride or a mixture containing potassium fluoride, which has a moisture percentage determined by the Karl Fisher method based on an amount of water generated by heating to 600°C.

It is preferable that the diluent salt be potassium chloride or a mixture containing potassium chloride, and for the moisture percentage in potassium chloride, which is determined by the Karl Fisher method based on an amount of water generated by heating to 600°C to be 0.05% by mass.

It is preferable that the metal salt for production of a tantalum powder be tantalum potassium fluoride, and for the moisture percentage in the tantalum potassium fluoride, which is determined by the Karl Fisher method based on an amount of water generated by heating to 600°C to be 0.1% by mass.

In particular, when these diluent salts and metal salts are used, an anode contaminated with less amount of impurities is produced, and a capacitor having excellent electric characteristics is produced.

The reduction reaction may include processes of subdividing the metal salt, which is raw material, and the reducing agent, and reacting small amounts thereof repeatedly, and thereby the reduction reaction is completed, other than the above-mentioned processes. Reducing gas such as gas containing hydrogen as the reducing agent may also be introduced in the reaction vessel.

After the reduction reaction is completed, the content is cooled. The obtained agglomerate is washed with water and an acidulous aqueous solution repeatedly, and thereby the diluent salt is removed, and a metal powder is produced. In this case, if necessary, a separation process, such as centrifugation, or filtration may be combined, and the particles may be washed with a solution containing hydrofluoric acid and hydrogen peroxide, or the like.

The resulting tantalum metal powder may be subjected to pre-treatments such as a heat coagulation treatment, or a deoxidation treatment, a gradual oxidation stabilization treatment. After that, the treated metal powder is molded, and sintered, and thereby a porous sintered body is produced. Below, examples of the specific method are explained.

The heat coagulation treatment is performed by heating and coagulating ultra-fine particles in the metal powder in vacuum in order to form secondary particles having a relatively large particle diameter. A porous sintered body, which is made by molding and sintering relative large secondary particles, has pores, which are larger than pores of a porous sintered body made of the ultra-fine particles. When the porous sintered body is used for an anode of an electrolytic capacitor, an electrolytic solution penetrates through the pores and spreads the inside of the porous sintered body. Due to this, the capacity of the electrolytic capacitor is improved. Impurities such as sodium, and magnesium, which are derived from the diluent salt, are removed by heating in a vacuum.

The heat coagulation treatment is generally performed by heating the metal powder to 1,000°C to 1,600°C for 0.5 to 2 hours in a vacuum. Before the heat coagulation treatment, a pre-coagulation treatment, in which an amount of water, which is sufficient to uniformly moisten the whole of the metal powder, is added while vibrating, is also performed. It is also possible to coagulate with hear while fusion growth of the primary particles is prevented and high surface area is maintained by adding previously approximately 10 to 300 ppm of phosphorus, boron, and the like to the metal powder.

After that, powders in a cake state, which is obtained by the heat coagulation, are crushed in air or inert gas, and a reducing agent such as magnesium is added. Thereby, oxygen in the powders and the reducing agent are reacted, and deoxidation is performed. The oxidation is performed in an inert gas atmosphere such as argon at the melting point of the reducing agent or more for 1 to 6 hours.

Then, during the cooling process, which is performed after the deoxidation treatment, the gradual oxidation stabilization treatment is performed by introducing air in argon gas. After that, residues in the powder, which are derived from the reducing agent such as magnesium, and magnesium oxide, are removed by acid cleaning.

After the heat coagulation treatment, deoxidation treatment, and gradual oxidation stabilization treatment are performed in this way, about 3 to 5% by weight of camphor ($C_{10}H_{16}O$) as a binder is added to the powder and press-molded. The resulting molding is sintered by heating to 1,000°C to 1,800°C for about 0.3 to 1 hour, and thereby a porous sintered body is produced. The sintering temperature is adjusted depending on kinds of the metal powder, and surface area of the powder.

When the porous sintered body is used for an anode of an electrolytic capacitor, before press molding of the metal powder, a lead wire is embedded in the powder and they are press molded, and sintered, and thereby the lead wire is integrated. Then, porous sintered body is subjected to a chemical conversion oxidation treatment by increasing voltage to a certain voltage, for example under conditions in which the temperature is 30 to 90°C, in an electrolytic solution such as phosphoric acid, nitric acid having a concentration of about 0.1% by mass, the current density is 40 to 80 mA/g, and the treating time is 1 to 3 hours. After that, an solid electrolytic layer such as manganese dioxide, lead oxide, and conductive polymer, a graphite layer, a silver paste layer is laminated on the porous sintered body in this order, a cathode terminal is connected on the laminated porous sintered body by soldering, and a resin cover is formed, and thereby this is used as an anode for an electrolytic capacitor.

The resulting anode for an electrolytic capacitor produced in this way has excellent characteristics such as less leakage current and high pressure resistance.

Examples

Below, the present invention is explained in detail with examples.

Reference Example 1

After drying a reaction vessel made of a nickel alloy at 130°C, potassium fluoride having a moisture percentage of 0.15% by mass and potassium chloride having a moisture percentage of 0.03% by mass were filled in the reaction vessel as a diluent salt such that the mixture ratio in weight is 1:1. Niobium potassium fluoride having a moisture percentage of 0.2% by mass as a metal salt, which is a raw material, was filled in the reaction vessel, the reaction vessel was covered with a cover, and air inside of the reaction vessel was changed sufficiently with argon gas. After melting by increasing the temperature to 800°C, an amount of sodium, which is in excess of 1% by mass above the amount required to reduce niobium potassium fluoride, was added, and niobium potassium fluoride was reduced. After cooling, the cover was opened, the product was washed with water, and then washed with a mixed acid, and thereby niobium powder containing impurities shown in Table 1 was obtained.

The moisture percentage of the diluent salt and the metal salt was measured as follows. Approximately 1 to 3 g of a sample was weighed, the sample was set in a carburetor in a blow-box. Moisture, which was adhered to the sample at the sampling process, was heated to 100°C to 150°C, and thereby the moisture was evaporated. An amount of the evaporated water was measured by the Karl Fisher moisture evaporation method. After that, the sample was heated to 600°C or more, and moisture generated was similarly measured by the Karl Fisher's moisture evaporation method.

An amount of impurities in the niobium powder was measured by dissolving the sample in hydrofluoric acid solution, and performing ICP mass spectrometry. The measuring method is as follows.

A sample was weighed and added to a beaker, 8 ml of hydrofluoric acid was added, and then this was covered with a watch glass. After that, 2 ml of nitric acid was subdivided and added, and the sample was heated and decomposed. After letting it stand and cool, the entire low surface of the watch glass and the inside of the beaker were washed with water. The obtained solution was poured in a 100 ml-flask using water, and diluted with water to a marked line. A part of the solution was sprayed in an argon plasma in an ICP emission spectrophotometer. Strength of emission spectrum of determined elements at wavelength suitable for each determined element was measured at measuring conditions (concentration) based on reproducibility standard at minimum and maximum ranges of determination, which is measured based on relative standard deviation of each determined element. Using a sample for a calibration curve, a blank test was also performed. After dissolving 1.000 g of the sample for a calibration curve in hydrofluoric acid and nitric acid, a standard solution for determined element was added. The added amount of the standard solution relative to 500 $\mu$g of the sample to be analyzed was 5.0 ml. A line showing the relationship between the strength of the emission spectrum of determined element and the added amount of the determined element in the solution for calibration curve was made and this was used as a calibration curve. The amount of the each determined element was calculated based on the strength of the emission spectrum obtained from the sample solution and in the blank test, and the calibration curve, and the amount of the determined elements in the sample was calculated by the following formula.

$$E = \frac{A_1 - (A_2 - A_3)}{m} \times 100$$

Wherein E denotes the percentage content of the determined element [% (m/m)];
$A_1$ denotes the detected amount of the determined element of the sample solution [g];
$A_2$ denotes the detected amount of the determined element of the solution in the blank test [g];
$A_3$ denotes the amount of the determined element in 1.000g of the sample for a calibration curve [g], and
m denotes the weight of the sample [g]

Table 1

| Impurities in | Fe | Ni | Cr | Mo | Total |
|---|---|---|---|---|---|
| Nb powder (ppm) | 6 | 8 | 3 | 3 | 20 |

Examples 2 to 4 and Comparative Examples I to 3

After drying the reaction vessel made of a nickel alloy at 130°C, the reduction reactions were performed in a manner identical to that of Reference Example 1, except that the diluent salts and the metal salts having the moisture percentage shown in Table 2 were used. As a result, the tantalum powders containing impurities shown in Table 2 were produced.

The amount of water generated by heating the diluent salts and the metal salts to 200°C was measured by the Karl Fisher method. The results are also shown in Table 2.

Table 2

| | Diluent salt | | Metal salt | | Total moisture in diluent salt and metal salt (% by mass) | Amount of impurities in metal powder (ppm) | Total moisture in diluent salt and metal salt at 200°C (% by mass) |
|---|---|---|---|---|---|---|---|
| | Kinds | Moisture percentage (% by mass) | Kinds | Moisture percentage (% by mass) | | | |
| Example 2 | potassium chloride + potassium fluoride | 0.03 | tantalum potassium fluoride | 0.02 | 0.05 | 13 | 0.03 |
| Example 3 | potassium chloride + potassium fluoride | 0.03 | tantalum potassium fluoride | 0.02 | 0.05 | 14 | 0.08 |
| Example 4 | potassium chloride + potassium fluoride | 0.03 | tantalum potassium fluoride | 0.02 | 0.05 | 16 | 0.13 |
| Comparative Example 1 | potassium chloride + potassium fluoride | 0.03 | tantalum potassium fluoride | 0.05 | 0.25 | 58 | 0.03 |
| Comparative Example 2 | potassium chloride + potassium fluoride | 0.2 | tantalum potassium fluoride | 0.05 | 0.25 | 88 | 0.08 |
| Comparative Example 3 | potassium chloride + potassium fluoride | 0.2 | tantalum potassium fluoride | 0.05 | 0.25 | 110 | 0.13 |

As shown in Table 1, the niobium powder produced in Reference Example 1 has small amount of impurities and has sufficient purity for an anode of an electrolyte capacitor.

It is clear from Table 2 that the metal powder, which was produced using the diluent salt and the metal salt containing the total moisture percentage of less than 0.2% by mass, has high purity. In addition, when the samples, which have the same total moisture percentage at 200°C, were heated to 600°C, they had different moisture percentages, that is, the moisture percentage, which is a focus of the present invention, is different. It was found that the amount of impurities contained in the tantalum powder is correlated with the moisture percentage, which is calculated based on the amount of water generated at 600°C, and is not correlated with the moisture percentage which is calculated based on the amount of water generated at 200°C.

Therefore, it is clear that sufficient drying is not carried out at 250°C or less, which is the prior temperature of drying. As a result, moisture remaining in the crystal of the metal salt and the diluent salt reacts with the reaction vessel. Due to this, compared with the metal powder produced by the method of the present invention, the tantalum powder produced by the prior method contains larger amounts of impurities such as Fe, Ni, Cr, and Mo, which are derived from the reaction vessel.

INDUSTRIAL APPLICABILITY

According to the method for evaluating metal salt and diluent salt, and the method for producing a metal powder, the metal salt and the diluent salt, which are suitable for producing metal powder, can be used. Therefore, it is possible to prevent releasing and contamination of the impurities generated by the reaction between the reaction vessel and the moisture so as to be minimal and to stably obtain a metal powder having high purity. The porous sintered body made by the metal powder may be used for an anode of an electrolytic capacitor, which has excellent characteristics such as little leakage of current and high capacity, which are desired by industry.

**Claims**

1.  A method for producing a tantalum powder in which a metal salt containing tantalum is reduced in a diluent salt to obtain a tantalum powder, wherein the total percentage of moisture in the metal salt and the diluent salt is 0.2% by mass or less as determined by the Karl Fisher method based on an amount of moisture generated by heating the metal salt and the diluent salt to 600°C.

2.  The method for producing tantalum powder according to claim 1, wherein the diluent salt is potassium fluoride or a mixture containing potassium fluoride, and the moisture percentage in potassium fluoride alone is 0.15% by mass or less, as determined by the Karl Fisher method.

3.  The method for producing tantalum powder according to claim 1, wherein the diluent salt is potassium chloride or a mixture containing potassium chloride, and the moisture percentage in potassium chloride alone is 0.05% by mass or less, as determined by the Karl Fisher method.

4.  The method for producing tantalum powder according to claim 1, wherein the metal salt is tantalum potassium fluoride, and the moisture percentage in tantalum potassium fluoride atone is 0.1% by mass or less, as determined by the Karl Fisher method.

5.  A method for evaluating a metal salt containing tantalum used for producing a tantalum powder, wherein the moisture percentage in a metal salt is measured based on an amount of moisture which is generated by heating the metal salt to 600°C or more.

**Patentansprüche**

1.  Verfahren zur Herstellung eines Tantalpulvers, in dem ein Tantal enthaltendes Metallsalz in einem Verdünnungssalz reduziert wird, um ein Tantalpulver zu erhalten, wobei der Gesamtprozentsatz an Feuchtigkeit in dem Metallsalz und in dem Verdünnungssalz 0,2 Masse-% oder weniger beträgt, bestimmt durch das Karl Fischer Verfahren, basierend auf einer Feuchtigkeitsmenge erzeugt durch Erhitzen des Metallsalzes und des Verdünnungssalzes auf 600 °C.

2.  Verfahren zur Herstellung eines Tantalpulvers gemäß Anspruch 1, worin das Verdünnungssalz Kaliumfluorid oder eine Kaliumfluorid enthaltende Mischung ist und der Prozentsatz an Feuchtigkeit, bestimmt durch das Karl Fischer Verfahren, in dem Kaliumfluorid allein 0,15 Masse-% oder weniger beträgt.

3.  Verfahren zur Herstellung eines Tantalpulvers gemäß Anspruch 1, worin das Verdünnungssalz Kaliumchlorid oder eine Kaliumchlorid enthaltende Mischung ist und der Prozentsatz an Feuchtigkeit, bestimmt durch das Karl Fischer Verfahren, in dem Kaliumchlorid allein 0,05 Masse-% oder weniger beträgt.

4.  Verfahren zur Herstellung eines Tantalpulvers gemäß Anspruch 1, worin das Metallsalz Tantalkaliumfluorid ist und der Prozentsatz an Feuchtigkeit, bestimmt durch das Karl Fischer Verfahren, in dem Tantalkaliumfluorid allein 0,1 Masse-% oder weniger beträgt.

5.  Verfahren zur Bewertung eines Tantal enthaltenden Metallsalzes, das zur Herstellung eines Tantalpulvers verwendet wird, worin der Prozentsatz an Feuchtigkeit in dem Metallsalz basierend auf einer Feuchtigkeitsmenge, die durch Erhitzen des Metallsalzes auf 600 °C oder mehr gebildet wird, gemessen wird.

**Revendications**

1. Méthode de production d'une poudre de tantale dans laquelle un sel de métal contenant du tantale est réduit dans un sel diluant pour obtenir une poudre de tantale, où le pourcentage total d'humidité dans le sel de métal et le sel diluant est de 0,2% en masse ou moins en déterminant par la méthode de Karl Fisher basée sur une quantité d'humidité générée en chauffant le sel de métal et le sel diluant à 600°C.

2. Méthode de production d'une poudre de tantale selon la revendication 1, où le sel diluant est du fluorure de potassium ou un mélange contenant du fluorure de potassium, et le pourcentage d'humidité dans le fluorure de potassium seul est de 0,15% en masse ou moins, en déterminant par la méthode de Karl Fisher.

3. Méthode de production d'une poudre de tantale selon la revendication 1, où le sel diluant est du chlorure de potassium ou un mélange contenant du chlorure de potassium et le pourcentage d'humidité dans le chlorure de potassium seul est de 0,05% en masse ou moins en déterminant par la méthode de Karl Fisher.

4. Méthode de production de poudre de tantale selon la revendication 1, où le sel de tantale est du fluorure de tantale potassium, et le pourcentage d'humidité dans le fluorure de tantale potassium seul est de 0,1% en masse ou moins, en déterminant par la méthode de Karl Fisher.

5. Méthode pour évaluer un sel de métal contenant du tantale utilisé pour la production d'une poudre de tantale, où le pourcentage d'humidité dans un sel de métal est mesuré en se basant sur une quantité d'humidité qui est générée en chauffant le sel de métal à 600°C ou plus.

**EP 1 563 932 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1561531 A1

- US 5234491 A